# EUROPEAN PATENT APPLICATION

(11) **EP 4 660 512 A1**
(43) Date of publication of application: **10.12.2025**
(21) Application number: 23920445.6
(22) Date of filing: 09.02.2023
(51) Int. Cl.: F16M 11/12, G05D 3/12, G09G 5/38

(54) **METHOD AND APPARATUS FOR ADJUSTING POSE OF DISPLAY SCREEN, SYSTEM, AND TERMINAL**

(71) Applicant: Shenzhen Yinwang Intelligent Technologies Co., Ltd., Shenzhen, Guangdong 518110 (CN)
(72) Inventor: CHEN, Zhikai, Shenzhen, Guangdong 518129 (CN)
(74) Representative: Thun, Clemens
(86) International application number: PCT/CN2023/075231
(87) International publication number: WO 2024/164237

(57) **Abstract**

A pose adjustment method, apparatus, and system for a display, and a terminal are provided, which can automatically adjust a position and/or a posture of the display based on one or more of real-time position information of a user, real-time position information of a seat, or a use habit of a user. This provides the user with personalized adjustment of a pose (a position and/or a posture) of the display. In this way, the user not only can view the display, but also can view the display clearly and comfortably, thereby achieving better displaying effect and bringing more comfortable experience to the user.

## Description

### TECHNICAL FIELD

This application relates to the field of displaying technologies, and in particular, to a pose adjustment method, apparatus, and system for a display, and a terminal.

### BACKGROUND

As multi-component integrated architectures are widely used, users have increasingly high requirements for richness of a plurality of components and comfort of use experience. The in-vehicle field is used as an example. A cockpit display, which serves as an entry for intelligent interaction such as navigation and entertainment, is gaining more attention from users. For example, a plurality of different positions (for example, a driver position, a front passenger position, and a rear position) within a vehicle cockpit all may be equipped with a display, to provide a more convenient service for drivers and passengers.

Usually, users of different heights and/or with use habits may have different requirements for a position and/or a posture of a display. However, existing displays cannot meet personalized requirements of the users, and cannot bring more comfortable experience to the users.

### SUMMARY

This application provides a pose adjustment method, apparatus, and system for a display, and a terminal, to provide a user with personalized adjustment of a pose (a position and/or a posture) of the display, and bring more comfortable experience to the user.

To achieve the foregoing objectives, the following technical solutions are used in embodiments of this application.

According to a first aspect, a pose adjustment method for a display is provided. The method may be applied to a unit, a module, or an apparatus that has a function of adjusting a pose of a display, for example, a pose adjustment apparatus. The method includes: obtaining first information, where the first information includes one or more of the following information: position information of a first user within a preset range of a first display, position information of a first seat corresponding to the first display, and historical pose information of the first display; and adjusting a position and/or a posture of the first display based on the first information.

The foregoing method may be applied to, but is not limited to, a scenario including a display and a seat, such as an in-vehicle scenario, a smart home scenario, a medical care scenario, or a smart office scenario. The in-vehicle scenario is used as an example. The first display is an in-vehicle display. A four-seat vehicle is used as an example in the in-vehicle scenario. The first display may be any one of the following: a driver screen, a front passenger screen, a left rear screen, or a right rear screen. Certainly, the first display may alternatively be any display in a cockpit of another multi-seat vehicle (for example, a two-seat vehicle, a seven-seat vehicle, or a six-seat vehicle). According to the solution provided in the first aspect, a unit, a module, or an apparatus that has a function of adjusting a pose of a display, for example, a pose adjustment apparatus, can automatically adjust a position and/or a posture of the display based on one or more of identity information and real-time position information of a user, real-time position information of a seat, or a use habit of a user. In this way, the user not only can view the display, but also can view the display clearly and comfortably, thereby achieving better displaying effect and improving user experience.

In a possible implementation, the first information includes the position information of the first user; and the adjusting the position and/or the posture of the first display based on the first information includes: adjusting the position of the first display, so that a distance between the first display and the first user meets a preset distance range, and/or an angle of the first display relative to the first user meets a first preset angle range. Based on this, a unit, a module, or an apparatus that has a function of adjusting a pose of a display, for example, a pose adjustment apparatus, can automatically adjust a position of the display based on real-time position of a user. For example, when detecting that a position of the user changes, the unit, the module, or the apparatus automatically controls, based on an actual change amount of the position of the user, the position and/or a posture of the display to change correspondingly. In this way, the user not only can view the display, but also can view the display clearly and comfortably, thereby achieving better displaying effect and improving user experience.

In a possible implementation, the first information includes the position information of the first user; and the adjusting the position and/or the posture of the first display based on the first information includes: adjusting the posture of the first display, so that the angle of the first display relative to the first user meets a second preset angle range. Based on this, a unit, a module, or an apparatus that has a function of adjusting a pose of a display, for example, a pose adjustment apparatus, can automatically adjust a posture of the display based on real-time position information of a user. For example, when detecting that a gaze direction of the user changes, the unit, the module, or the apparatus automatically controls, based on an actual change amount of the gaze direction of the user, the posture of the display to change correspondingly. In this way, the user not only can view the display, but also can view the display clearly and comfortably, thereby achieving better displaying effect and improving user experience.

In a possible implementation, the first information includes the position information of the first seat; and the adjusting the position and/or the posture of the first display based on the first information includes: adjusting the position of the first display, so that a distance between the first display and the first seat meets a preset distance range, and/or an angle of the first display relative to the first seat meets the first preset angle range. Based on this, a unit, a module, or an apparatus that has a function of adjusting a pose of a display, for example, a pose adjustment apparatus, can automatically adjust a position of the display based on real-time position of a seat. For example, when detecting that a position of the seat changes, the unit, the module, or the apparatus automatically controls, based on an actual change amount of the position of the seat, the position and/or a posture of the display to change correspondingly. In this way, the user not only can view the display, but also can view the display clearly and comfortably, thereby achieving better displaying effect and improving user experience.

In a possible implementation, the first information includes the position information of the first seat; and the adjusting the position and/or the posture of the first display based on the first information includes: adjusting the posture of the first display, so that the angle of the first display relative to the first seat meets the second preset angle range. Based on this, a unit, a module, or an apparatus that has a function of adjusting a pose of a display, for example, a pose adjustment apparatus, can automatically adjust a posture of the display based on real-time position information of a seat. For example, when detecting that a seat angle changes, the unit, the module, or the apparatus automatically controls, based on an actual change amount of the seat angle, the posture of the display to change correspondingly. In this way, the user not only can view the display, but also can view the display clearly and comfortably, thereby achieving better displaying effect and improving user experience.

For example, the first information may be obtained by using one or more of the following: a camera, a distance sensor, a pressure sensor, and an angle sensor. However, this application does not limit a specific manner and method for obtaining the position information of the first user.

In a possible implementation, the first information includes the historical pose information of the first display; and the adjusting the position and/or the posture of the first display based on the first information includes: adjusting a pose of the first display to a pose of the first display before a last shutdown; or adjusting a pose of the first display to a most frequent pose of the first display within a preset time range. Based on this, a unit, a module, or an apparatus that has a function of adjusting a pose of a display, for example, a pose adjustment apparatus, can automatically adjust the position and/or the posture of the display based on a historical use habit of a user. This not only can ensure that the user can view the display and view the display clearly and comfortably, but also can meet a use habit of the user, thereby improving user experience.

In a possible implementation, a first account is currently logged in to on the first display, and the historical pose information of the first display is historical pose information in a process in which the first account is logged in to on the first display. For example, a unit, a module, or an apparatus that has a function of adjusting a pose of a display, for example, a pose adjustment apparatus, may obtain information about a current login account of the first display, and obtain, based on the account information, historical pose information in a previous process in which the account is logged in to on the first display. For example, assuming that the first account is currently logged in to on the first display, the pose adjustment apparatus may obtain only historical pose information in a process in which the first account is logged in to on the first display.

In a possible implementation, the method further includes: obtaining control information for adjusting the pose of the first display by a user, where the control information is triggered by the user in any one of the following manners: a control button, a mechanical joystick, a voice instruction, and a gesture instruction; and controlling, based on the control information, the position and/or the posture of the first display to change correspondingly. Based on this, the pose adjustment apparatus not only has a capability of automatically adjusting a position and/or a posture of a display based on one or more pieces of information such as position information of a user within a preset range of the display, position information of a seat corresponding to the display, and historical pose information of the display, but also supports the user in manually and accurately adjusting the position and/or the posture of the display in a conventional manual adjustment manner.

In a possible implementation, the method further includes: adjusting a position of the first seat based on an adjusted position of the first display; and/or adjusting a backrest angle of the first seat based on an adjusted posture of the first display. Based on this, the pose adjustment apparatus may further automatically adjust a seat position and/or a backrest angle, to implement better displaying effect. In this way, the user not only can view the display, but also can view the display clearly and comfortably, thereby improving user experience.

According to a second aspect, a unit, a module, or an apparatus that has a function of adjusting a pose of a display is provided, for example, a pose adjustment apparatus. The pose adjustment apparatus is used as an example. The pose adjustment apparatus may include: an information obtaining module, configured to obtain first information, where the first information includes one or more of the following information: position information of a first user within a preset range of a first display, position information of a first seat corresponding to the first display, and historical pose information of the first display; and a control module, configured to adjust a position and/or a posture of the first display based on the first information.

The first display may include but is not limited to a display in a scenario such as an in-vehicle scenario, a smart home scenario, a medical care scenario, or a smart office scenario. The in-vehicle scenario is used as an example. The first display is an in-vehicle display. A four-seat vehicle is used as an example in the in-vehicle scenario. The first display may be any one of the following: a driver screen, a front passenger screen, a left rear screen, or a right rear screen. Certainly, the first display may alternatively be any display in a cockpit of another multi-seat vehicle (for example, a two-seat vehicle, a seven-seat vehicle, or a six-seat vehicle). According to the solution provided in the second aspect, a unit, a module, or an apparatus that has a function of adjusting a pose of a display, for example, a pose adjustment apparatus, can automatically adjust a position and/or a posture of the display based on one or more of real-time position information of a user, real-time position information of a seat, or a use habit of a user. In this way, the user not only can view the display, but also can view the display clearly and comfortably, thereby achieving better displaying effect and improving user experience.

In a possible implementation, the first information includes the position information of the first user, and that the control module adjusts the position and/or the posture of the first display based on the first information includes: The control module adjusts the position of the first display, so that a distance between the first display and the first user meets a preset distance range, and/or an angle of the first display relative to the first user meets a first preset angle range. Based on this, a unit, a module, or an apparatus that has a function of adjusting a pose of a display, for example, a pose adjustment apparatus, can automatically adjust a position of the display based on real-time position of a user. For example, when detecting that a position of the user changes, the unit, the module, or the apparatus automatically controls, based on an actual change amount of the position of the user, the position and/or a posture of the display to change correspondingly. In this way, the user not only can view the display, but also can view the display clearly and comfortably, thereby achieving better displaying effect and improving user experience.

In a possible implementation, the first information includes the position information of the first user, and that the control module adjusts the position and/or the posture of the first display based on the first information includes: The control module adjusts the posture of the first display, so that the angle of the first display relative to the first user meets a second preset angle range. Based on this, a unit, a module, or an apparatus that has a function of adjusting a pose of a display, for example, a pose adjustment apparatus, can automatically adjust a posture of the display based on real-time position information of a user. For example, when detecting that a gaze direction of the user changes, the unit, the module, or the apparatus automatically controls, based on an actual change amount of the gaze direction of the user, the posture of the display to change correspondingly. In this way, the user not only can view the display, but also can view the display clearly and comfortably, thereby achieving better displaying effect and improving user experience.

In a possible implementation, the first information includes the position information of the first seat, and that the control module adjusts the position and/or the posture of the first display based on the first information includes: The control module adjusts the position of the first display, so that a distance between the first display and the first seat meets a preset distance range, and/or an angle of the first display relative to the first seat meets the first preset angle range. Based on this, a unit, a module, or an apparatus that has a function of adjusting a pose of a display, for example, a pose adjustment apparatus, can automatically adjust a position of the display based on real-time position of a seat. For example, when detecting that a position of the seat changes, the unit, the module, or the apparatus automatically controls, based on an actual change amount of the position of the seat, the position and/or a posture of the display to change correspondingly. In this way, the user not only can view the display, but also can view the display clearly and comfortably, thereby achieving better displaying effect and improving user experience.

In a possible implementation, the first information includes the position information of the first seat, and that the control module adjusts the position and/or the posture of the first display based on the first information includes: The control module adjusts the posture of the first display, so that the angle of the first display relative to the first seat meets the second preset angle range. Based on this, a unit, a module, or an apparatus that has a function of adjusting a pose of a display, for example, a pose adjustment apparatus, can automatically adjust a posture of the display based on real-time position information of a seat. For example, when detecting that a seat angle changes, the unit, the module, or the apparatus automatically controls, based on an actual change amount of the seat angle, the posture of the display to change correspondingly. In this way, the user not only can view the display, but also can view the display clearly and comfortably, thereby achieving better displaying effect and improving user experience.

For example, the first information may be obtained by the control module by using one or more of the following: a camera, a distance sensor, a pressure sensor, and an angle sensor. However, this application does not limit a specific manner and method for obtaining the position information of the first user.

In a possible implementation, the first information includes the historical pose information of the first display, and that the control module adjusts the position and/or the posture of the first display based on the first information includes: The control module adjusts a pose of the first display to a pose of the first display before a last shutdown; or the control module adjusts a pose of the first display to a most frequent pose of the first display within a preset time range. Based on this, a unit, a module, or an apparatus that has a function of adjusting a pose of a display, for example, a pose adjustment apparatus, can automatically adjust the position and/or the posture of the display based on a historical use habit of a user. This not only can ensure that the user can view the display and view the display clearly and comfortably, but also can meet a use habit of the user, thereby improving user experience.

In a possible implementation, the information obtaining module is further configured to obtain control information for adjusting the pose of the first display by a user, where the control information is triggered by the user in any one of the following manners: a control button, a mechanical joystick, a voice instruction, and a gesture instruction. The control module is further configured to control, based on the control information, the position and/or the posture of the first display to change correspondingly. Based on this, the pose adjustment apparatus not only has a capability of automatically adjusting a position and/or a posture of a display based on one or more pieces of information such as position information of a user within a preset range of the display, position information of a seat corresponding to the display, and historical pose information of the display, but also supports the user in manually and accurately adjusting the position and/or the posture of the display in a conventional manual adjustment manner.

In a possible implementation, the control module is further configured to: adjust a position of the first seat based on an adjusted position of the first display; and/or adjust a backrest angle of the first seat based on an adjusted posture of the first display. Based on this, the pose adjustment apparatus may further automatically adjust a seat position and/or a backrest angle, to implement better displaying effect. In this way, the user not only can view the display, but also can view the display clearly and comfortably, thereby improving user experience.

According to a third aspect, a pose adjustment system for a display is provided. The system includes: one or more displays; a unit, a module, or an apparatus that has a function of adjusting a pose of a display, for example, a pose adjustment apparatus; and one or more of the following: a camera and/or a distance sensor disposed on the one or more displays, a position input device for a seat corresponding to the one or more displays, a historical pose information recorder, a pose control button and/or a mechanical joystick corresponding to the one or more displays, and a microphone corresponding to the one or more displays.

According to a fourth aspect, a computer-readable storage medium is provided. The computer-readable storage medium stores computer program instructions. When the computer program instructions are executed by a processor, the method according to any one of the possible implementations of the first aspect is implemented.

According to a fifth aspect, a computer program product including instructions is provided. When the computer program product is run on a computer, the computer is enabled to implement the method according to any one of the possible implementations of the first aspect.

According to a sixth aspect, a chip system is provided. The chip system includes a processing circuit and a storage medium. The storage medium stores computer program instructions. When the computer program instructions are executed by a processor, the method according to any one of the possible implementations of the sixth aspect is implemented. The chip system may include a chip, or may include a chip and another discrete component.

### BRIEF DESCRIPTION OF DRAWINGS

FIG. 1A is a diagram of four application scenarios according to an embodiment of this application;
FIG. 1B is a diagram of a first architecture of a control system for implementing display pose adjustment according to an embodiment of this application;
FIG. 1C is a diagram of a second architecture of a control system for implementing display pose adjustment according to an embodiment of this application;
FIG. 2 is a diagram of a third architecture of a control system for implementing display pose adjustment according to an embodiment of this application;
FIG. 3 is a diagram showing several types of display position and posture adjustment according to an embodiment of this application;
FIG. 4A is a diagram of a process of a first pose adjustment method for a display according to an embodiment of this application;
FIG. 4B is a flowchart of a first pose adjustment method for a display according to an embodiment of this application;
FIG. 4C is a possible example diagram of several first displays in an in-vehicle scenario according to an embodiment of this application;
FIG. 5 is a diagram of first display pose adjustment according to an embodiment of this application;
FIG. 6 is a diagram of second display pose adjustment according to an embodiment of this application;
FIG. 7 is a diagram of third display pose adjustment according to an embodiment of this application;
FIG. 8 is a flowchart of a second pose adjustment method for a display according to an embodiment of this application;
FIG. 9 is a diagram of fourth display pose adjustment according to an embodiment of this application;
FIG. 10 is a diagram of fifth display pose adjustment according to an embodiment of this application;
FIG. 11 is a diagram of sixth display pose adjustment according to an embodiment of this application; and
FIG. 12 is a flowchart of a third pose adjustment method for a display according to an embodiment of this application.

### DESCRIPTION OF EMBODIMENTS

The following describes the technical solutions in embodiments of this application with reference to the accompanying drawings in embodiments of this application. In descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more.

In the following, terms "first" and "second" are merely intended for a purpose of description, and shall not be understood as an indication or implication of relative importance or implicit indication of a quantity of indicated technical features. Therefore, a feature defined by "first" or "second" may explicitly or implicitly include one or more features. In addition, objects modified by different prefix words may be the same or different. For example, if a described object is a "device", a "first device" and a "second device" may be devices of a same type, or devices of different types. For another example, if a described object is "information", "first information" and "second information" may be information of same content or information of different content. In conclusion, in embodiments of this application, use of prefix words such as an ordinal number for distinguishing between the described objects constitutes no limitation on the described objects. For descriptions of the described objects, refer to context descriptions in claims or embodiments, and the use of such prefix words should not constitute a redundant limitation.

An embodiment of this application provides a pose adjustment method for a display. The method may be applied to a scenario including a display and a seat, such as an in-vehicle scenario, a smart home scenario, a medical care scenario, or a smart office scenario. A position and/or a posture of the display may be adjusted, so that a user not only can view the display, but also can view the display clearly and comfortably.

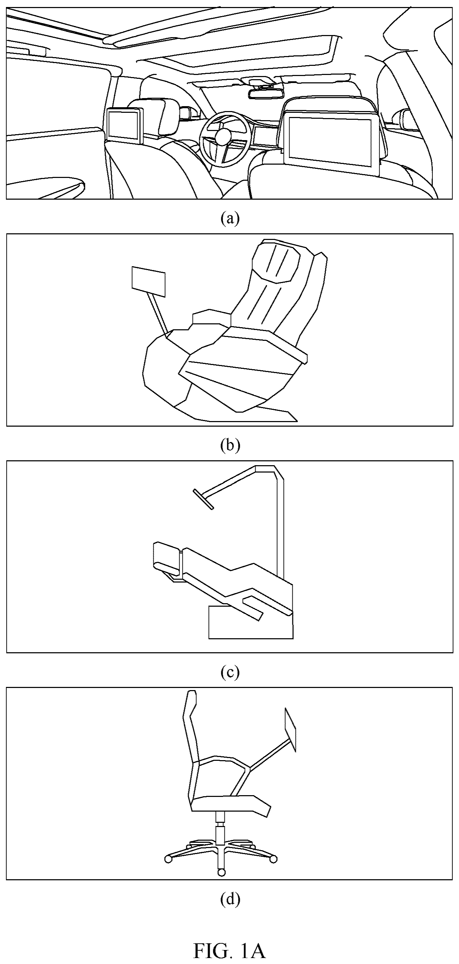

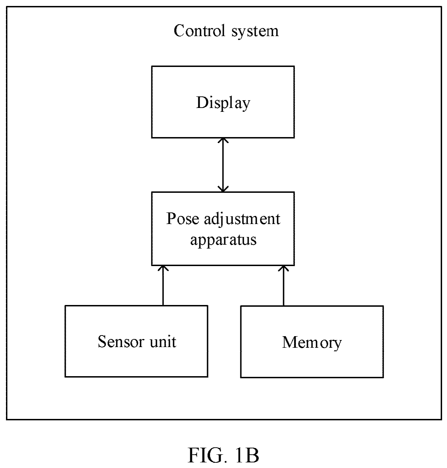

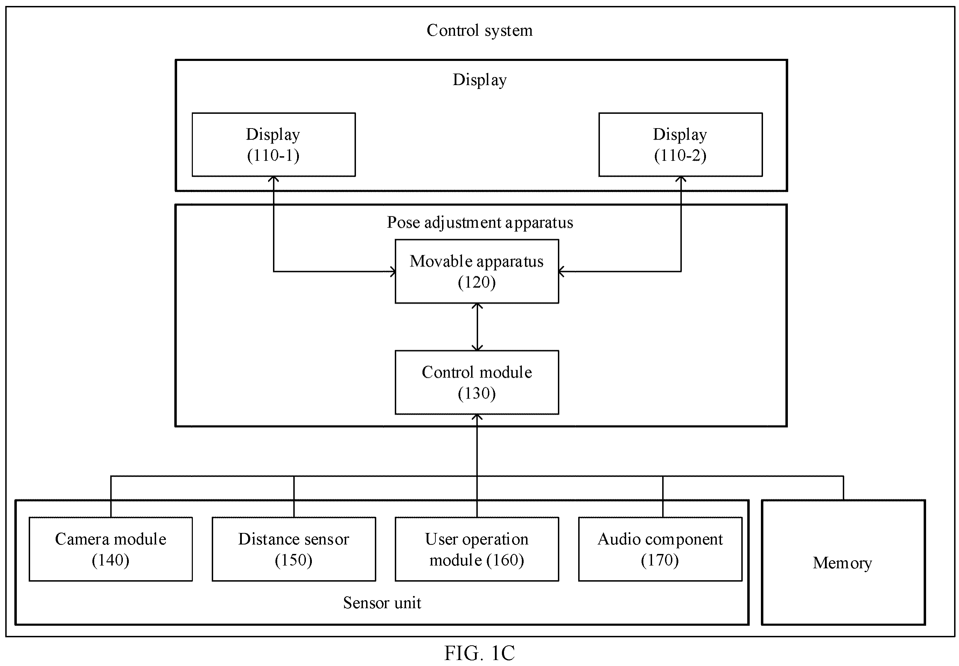

For example, FIG. 1A is a diagram of several application scenarios. (a) ofFIG. 1A shows an in-vehicle scenario including a display and a cockpit seat; (b) ofFIG. 1A shows a smart home scenario including a display and a smart sofa; (c) of FIG. 1Ashows a medical care scenario including a display and a treatment table; and (d) ofFIG. 1A shows a smart office scenario including a display and an office chair.

An in-vehicle scenario is used as an example. When a position and/or a posture of a display relative to a driver make/makes it difficult for the driver to clearly view information on the display, the driver may need to spend more time and pay attention to the display, which affects driving safety. Alternatively, when a position and/or a posture of a display relative to a passenger in a vehicle require/requires the passenger to maintain an uncomfortable sitting posture when browsing interface content on the display, user experience is greatly affected. Especially when different users have different requirements for the position and/or the posture of the display due to different heights and/or use habits, personalized adjustment of the position and/or the posture of the display brings more secure and comfortable use experience to the users.

To provide the users with personalized position and/or posture adjustment of the display based on an actual requirement of the users, in this application, the display is mounted on a movable apparatus, and a control module controls the movable apparatus to adjust the position and/or the posture of the display. The movable apparatus may support adjustment of the position of the display by connecting to the display and driving the position of the display to move, and the movable apparatus may further support adjustment of the posture of the display by connecting to the display and driving a posture angle of the display to change.

In an example, in this embodiment of this application, the control module may adjust the position and/or the posture of the display based on one or more of position information of a user corresponding to the display, position information of a seat corresponding to the display, historical pose information of the display, manual adjustment information of the user, and the like.

For example, FIG. 1B is a diagram of an architecture of a control system for implementing display pose adjustment according to an embodiment of this application. As shown in FIG. 1B, the control system may include a display and a pose adjustment apparatus, and the control system may further include a sensor unit and/or a memory (in FIG. 1B, an example in which the control system includes the sensor unit and the memory is used).

The display is used as a content display medium, and may be configured to display a content interface. For example, the content interface may include but is not limited to an application interface or a mini program interface such as a navigation interface, a video interface, a music interface, a home interface, a shopping interface, or an office interface. This is not limited in this embodiment of this application. The pose adjustment apparatus is configured to adjust a position and/or a posture of the display. For example, the pose adjustment apparatus may adjust the position and/or the posture of the display based on one or more pieces of information such as the position information of the user and the position information of the seat that are collected by the sensor unit; and/or, the pose adjustment apparatus may adjust the position and/or the posture of the display based on historical pose information that is of the display and that is stored in the memory.

In an example, as shown in FIG. 1C, the control system may include one or more displays (in FIG. 1C, a display 110-1 and a display 110-2 are used as examples), a pose adjustment apparatus, a sensor unit, and a memory. The pose adjustment apparatus may include but is not limited to a movable apparatus 120 and a control module 130. Alternatively, the pose adjustment apparatus may be a unit or a module that has a function of adjusting a pose of a display. This is not specifically limited in this embodiment of this application. In the following embodiments, only the pose adjustment apparatus is used as an example for description.

The display 110-1 and the display 110-2 are movably and/or rotatably mounted on the movable apparatus 120. The movable apparatus 120 may drive the display 110-1 or the display 110-2 to change a position and/or a posture of the display 110-1 or the display 110-2.

The control module 130 is configured to: generate a control instruction, and instruct the movable apparatus 120 to drive, according to the control instruction, the display 110-1 or the display 110-2 to change the position and/or the posture of the display 110-1 or the display 110-2.

In a possible structure, as shown in FIG. 1C, the sensor unit may include one or more of the following: a camera module 140, a distance sensor 150, a user operation module 160, an audio component 170, and the like. For example, the user operation module 160 may include but is not limited to a control button and a mechanical joystick.

In an example, the control module 130 may generate a control instruction based on manual adjustment made by the user, for example, using a control button, a mechanical joystick, a voice instruction, a gesture instruction, and the like by the user. For example, the control module 130 may obtain an operation of pressing the control button by the user, and generate a corresponding control instruction based on the operation. For another example, the control module 130 may obtain a specific operation performed by the user on the mechanical joystick, and generate a corresponding control instruction based on the operation. For another example, the control module 130 may obtain a sound signal collected by the audio component 170, and generate a corresponding control instruction when it is identified that the sound signal is a preset sound signal (for example, adjusting the display upward, downward, forward, backward, leftward, or rightward). For another example, the control module 130 may obtain an image frame captured by the camera module 140, and generate a corresponding control instruction when it is identified that the image frame includes a preset image feature. After the user manually adjusts a pose, such information may be recorded as historical pose information, and is invoked in a subsequent adjustment process. For example, when the user is in a same scenario again, pose information obtained after manual adjustment by the user is invoked, and the display is directly adjusted to that pose.

In an example, the control module 130 may automatically generate a control instruction based on one or more of position information of a user corresponding to the display, position information of a seat corresponding to the display, historical pose information of the display, and the like. For example, the control module 130 may automatically obtain the position information of the user determined by a user image (or a seat image corresponding to the display) captured by the camera module 140 (for example, an infrared camera), and determine a pose of the display relative to the user, to generate a corresponding control instruction based on the pose of the display relative to the user. Alternatively, the control module 130 may automatically obtain the position information of the seat determined by a seat image that corresponds to the display and that is captured by the camera module 140, and determine a pose of the display relative to the seat, to generate a corresponding control instruction based on the pose of the display relative to the seat. For another example, the control module 130 may automatically obtain the position of the user/seat relative to the display collected by the distance sensor 150, and generate a corresponding control instruction based on the position of the user/seat relative to the display. For another example, the control module 130 may automatically generate a corresponding control instruction based on the historical pose information of the display stored in the memory, for example, generate a control instruction for instructing to adjust a pose of the display to a pose before a last shutdown, or generate a control instruction for instructing to adjust a pose of the display to a most frequent pose within a preset time range (for example, one week).

The distance sensor 150 may include one or more of a Hall sensor, a time-of-flight (time of flight, TOF) sensor, and a radar (for example, a millimeter-wave radar, a lidar, or an ultrasonic radar). This is not specifically limited in this embodiment of this application.

It should be noted that the control system in this embodiment of this application may include one distance sensor 150, or may include a plurality of distance sensors 150, for example, may include a sensor array including a plurality of distance sensors 150.

Certainly, the control system may further include another control-related component or device. This is not limited in this embodiment of this application.

In some embodiments of this application, the movable apparatus 120 may further have a capability of reporting the position and the posture of the display to the control module 130. In this way, the control module 130 can determine, based on the position and/or the posture of the display, a position and/or a backrest angle of a seat corresponding to the display; the control module 130 can further learn whether the position and/or the posture of the display is adjusted to a target position and/or posture; and the control module 130 can further automatically memorize a historical pose of the display and have subsequent pose adjustment. For example, the movable apparatus 120 may further include a sensor unit. For example, a distance sensor is included, and is configured to: detect a position of the display and feed back the position to the control module 130, so that the control module 130 learns of the position of the display in real time. For another example, an angle sensor is included, and is configured to: detect an angle of the display and feed back the angle to the control module 130, so that the control module 130 learns of a posture of the display in real time.

It may be understood that a structure shown in FIG. 1C in this application does not constitute a specific limitation on the control system. In some other embodiments of this application, the control system may include more or fewer components than those shown in the figure, or have some components combined, or have some components split, or have a different component arrangement. The components shown in the figure may be implemented by hardware, software, or a combination of software and hardware.

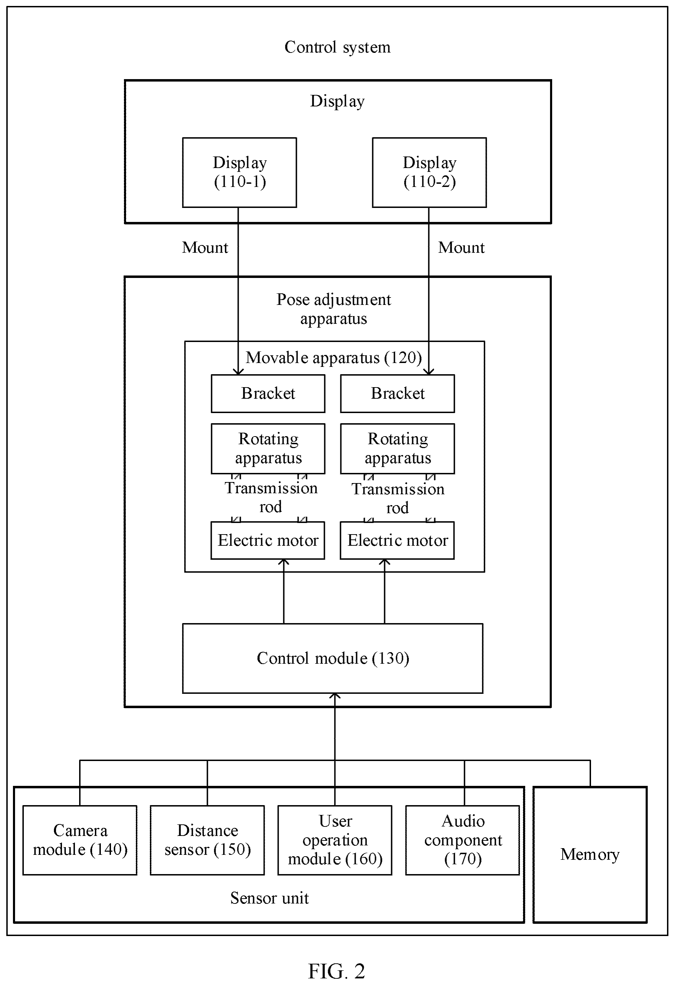

In a possible implementation, as shown in FIG. 2, the movable apparatus 120 may include an electric motor (also referred to as a motor (motor)), a transmission rod, a rotating apparatus, and a bracket. The display 110-1 or the display 110-2 may be movably mounted on the bracket.

The electric motor shown in FIG. 2 is configured to drive, through electromagnetic induction, a starter rotor to rotate, so that a small gear on the rotor drives an engine flywheel to rotate, which in turn drives the display 110-1 or the display 110-2 to change the position and/or the posture of the display 110-1 or the display 110-2.

A stepping motor (stepping motor) is used as an example of the electric motor. The stepping motor is an electric motor that converts an electrical pulse signal into corresponding angular displacement or linear displacement. Each time the stepping motor receives a pulse signal, the rotor rotates by one angle or moves one step forward. Angular displacement or linear displacement output by the stepping motor is proportional to a quantity of input pulses, and a rotational speed is proportional to a pulse frequency. Therefore, the stepping motor is also referred to as a pulse motor. In an example, the stepping motor may control, by advancing forward, retracting backward, shifting left, or shifting right, the transmission rod to drive the rotating apparatus, so that the rotating apparatus drives a position and/or a posture of the bracket to change. In this way, the display moves in different directions (such as up, down, front, back, left, and right) and/or a posture angle (such as a pitch angle and a roll angle) changes. Alternatively, the movable apparatus 120 in this embodiment of this application may further drive, in another manner, the display 110-1 or the display 110-2 to change the position and/or the posture of the display 110-1 or the display 110-2. This is not limited in this embodiment of this application.

It should be noted that FIG. 2 shows merely an example in which the movable apparatus 120 drives, by using a combination of a plurality of groups of electric motors, the transmission rod, the rotating apparatus, and the bracket, a plurality of displays to change positions and/or postures of the displays. In some other embodiments of this application, the movable apparatus 120 may alternatively drive, by using a combination of a same electric motor, the transmission rod, and the rotating apparatus, positions and/or postures of brackets mounted with different displays to change, so that the display moves in different directions and/or a posture angle changes.

In addition, this embodiment of this application is merely an example in which the display is directly used as a display carrier of a content interface and the movable apparatus 120 directly drives a plurality of displays to change positions and/or postures of the displays. In some other embodiments of this application, the content interface may alternatively be projected to a preset position based on a head-up display (head-up display, HUD) solution. The preset position may be understood as the "display". The movable apparatus 120 may drive, by using a combination of a same electric motor, the transmission rod, and the rotating apparatus, a position and/or a posture of an optical element and/or a bracket mounted with a projection apparatus to change, so that a position of the preset position of the content interface projected by the projection apparatus changes. The optical element includes a reflector, a lens, a grating, a polarizer, and the like. The preset position may include but is not limited to a projection entity such as a front windshield of a vehicle in an in-vehicle scenario, and a curtain or a wall in a smart home scenario, a medical care scenario, or a smart office scenario. The in-vehicle field is used as an example. The vehicle in embodiments of this application does not refer to a specific type of transportation means. Optionally, the vehicle may be a ground-based transportation means, for example, a car, a bus, an underground train, or a high-speed train. Optionally, the vehicle may alternatively be a water surface-based transportation means, for example, a ship, a cushion ship, or a submarine. Optionally, the vehicle may alternatively be an air transportation means, for example, an airplane or a helicopter. The cockpit display in embodiments of this application may be integrated on the vehicle. Optionally, the cockpit display may alternatively be independent of the vehicle, and is mounted on the vehicle as a part of an in-vehicle terminal. In other words, the in-vehicle terminal may include a plurality of displays that are mutually independent, and the plurality of displays may work independently, for example, may separately perform audio and video playing, an entertainment game operation, and the like.

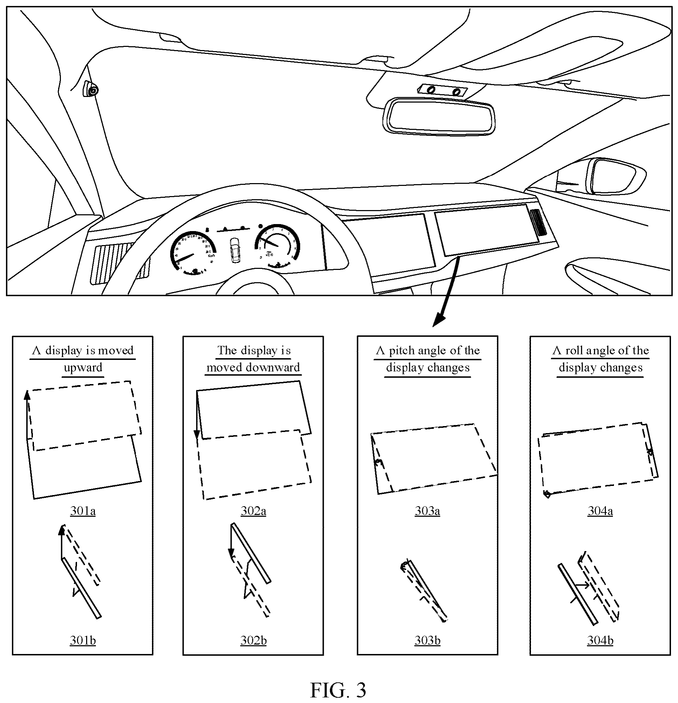

For example, FIG. 3 shows several examples of position and posture adjustment of a display by using an example in which the display is a vehicle front passenger screen. 301a and 301b in FIG. 3 show a change process of moving the display upward, where 301a is a diagram of the change process of moving the display upward, and 301b is a left view of the change process of moving the display upward. 302a and 302B in FIG. 3 show a change process of moving the display downward, where 302a is a diagram of the change process of moving the display downward, and 302b is a left view of the change process of moving the display downward. 303a and 303b in FIG. 3 show a change process of a pitch angle of the display, where 303a is a diagram of the change process of the pitch angle of the display, and 303b is a left view of the change process of the pitch angle of the display. 304a and 304b in FIG. 3 show a change process of a roll angle of the display, where 304a is a diagram of the change process of the pitch angle of the display, and 304b is a left view of the change process of the pitch angle of the display. For a change process such as moving the display to the left, moving the display to the right, moving the display forward, and moving the display backward, refer to the example shown in FIG. 3. Details are not described herein again.

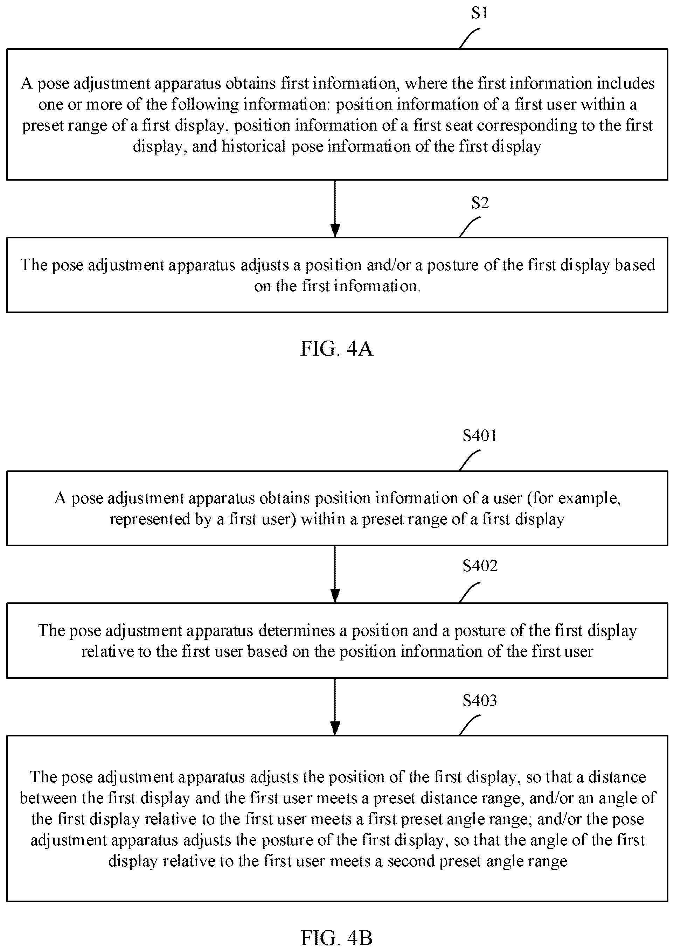

FIG. 4A shows a process of a pose adjustment method for a display according to an embodiment of this application. The method may include S1 and S2.

S1: A pose adjustment apparatus obtains first information, where the first information includes one or more of the following information: position information of a first user within a preset range of a first display, position information of a first seat corresponding to the first display, and historical pose information of the first display.

The first display may be a display in a scenario such as an in-vehicle scenario, a smart home scenario, a medical care scenario, or a smart office scenario, for example, a cockpit display in the in-vehicle scenario, a smart sofa display in the smart home scenario, a treatment table display in the medical care scenario, or an office chair display in the smart office scenario. This is not specifically limited in this embodiment of this application.

In addition, the first display may be configured to display a content interface, for example, an application interface or a mini program interface such as a navigation interface, a video interface, a music interface, a home interface, a shopping interface, or an office interface. This is not limited in this embodiment of this application.

S2: The pose adjustment apparatus adjusts a position and/or a posture of the first display based on the first information.

In an example, the first information includes the position information of the first user within the preset range of the first display.

It may be understood that, when the first information includes the position information of the first user within the preset range of the first display, the pose adjustment apparatus may determine a position and a posture of the first display relative to the first user based on the first information. In this case, the pose adjustment apparatus may adjust the position of the first display relative to the first user to an appropriate position and/or adjust the posture of the first display relative to the first user to an appropriate posture, to ensure that the user not only can view the display, but also can view the display clearly and comfortably, thereby achieving better displaying effect.

In an example, the first information includes the position information of the first seat within the preset range of the first display.

It may be understood that, when the first information includes the position information of the first seat within the preset range of the first display, the pose adjustment apparatus may determine a position and a posture of the first display relative to the first seat based on the first information. In this case, the pose adjustment apparatus may adjust the position of the first display relative to the first seat to an appropriate position and/or adjust the posture of the first display relative to the first seat to an appropriate posture, to ensure that the user on the first seat not only can view the display, but also can view the display clearly and comfortably, thereby achieving better displaying effect.

In an example, the first information includes the historical pose information of the first display.

It may be understood that, when the first information includes the historical pose information of the first display, the pose adjustment apparatus may learn of a use habit of the user based on the first information, for example, learn of a position and/or a posture that is of the first display relative to the first seat and that the user is more accustomed to, and adjust the position of the first display relative to the first seat to a position that the user is accustomed to and/or adjust the posture of the first display relative to the first seat to a posture that the user is accustomed to, to ensure that the user on the first seat not only can view the display, but also can view the display clearly and comfortably, thereby achieving better displaying effect.

The following uses the in-vehicle field as an example to describe in detail, with reference to specific embodiments, a pose adjustment method for a display provided in an embodiment of this application.

In a possible embodiment, the pose adjustment apparatus may adjust a position and/or a posture of a display based on position information of a user within a preset range of the display.

For example, FIG. 4B is a flowchart of a pose adjustment method for a display according to an embodiment of this application. As shown in FIG. 4B, the pose adjustment method for the display provided in this embodiment of this application may include S401 to S403.

S401: A pose adjustment apparatus obtains position information of a user (for example, represented by a first user) within a preset range of a first display.

The first display may be any display in a vehicle. The first display may be configured to display a content interface, for example, an application interface or a mini program interface such as a navigation interface, a video interface, a music interface, a home interface, a shopping interface, or an office interface. This is not limited in this embodiment of this application.

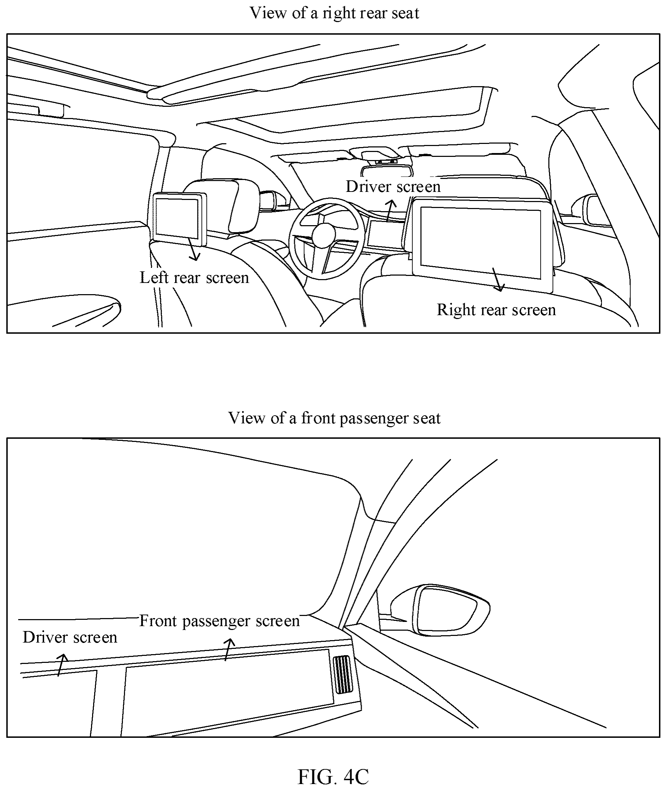

A four-seat vehicle in an in-vehicle scenario is used as an example. The first display is a driver screen, a front passenger screen, a left rear screen, a right rear screen, or the like shown in FIG. 4C (FIG. 4C shows the driver screen, the left rear screen, and the right rear screen from a view of a right rear seat, and the driver screen and the front passenger screen from a view of a front passenger seat).

Certainly, the first display may alternatively be any display in a cockpit of another multi-seat vehicle (for example, a two-seat vehicle, a seven-seat vehicle, a six-seat vehicle, a bus, a high-speed train, an airplane, or a ship). This is not specifically limited in this embodiment of this application. In addition, in FIG. 4C, only an example in which the driver screen is a middle large screen is used. In actual application, the driver screen may further include a central control panel. For example, the central control panel may include one or more instrument interfaces.

In some embodiments, the position information of the first user may represent a position of the first user.

In some other embodiments, the position information of the first user may further represent a face direction or a gaze direction of the first user.

In a possible implementation, the pose adjustment apparatus may obtain, by using a camera module (for example, an infrared camera), an image within a framing range of the camera module, and perform feature analysis on the image. When the image includes a user feature such as a face or a human body, the image is analyzed to determine position information of the user (for example, the first user). When the first user is within the preset range of the first display, the position information of the first user is sent to the pose adjustment apparatus through a communication connection to the pose adjustment apparatus. The position information of the first user may indicate specific coordinate information of the first user in a preset coordinate system, or may be a position and an angle of a preset part (for example, a face, a body, or an eye) of the first user relative to the camera module. Based on this, the pose adjustment apparatus may obtain the position information of the first user within the preset range of the first display from the camera module.

In a possible implementation, the pose adjustment apparatus may detect and identify, by using a distance sensor, a surrounding target object of the pose adjustment apparatus and a position of the surrounding target object relative to the distance sensor. When detecting and identifying that the surrounding target object within the preset range is a person (for example, the first user), the distance sensor may send the position information of the first user to the pose adjustment apparatus through a communication connection to the pose adjustment apparatus. The position information of the first user may indicate specific coordinate information of the first user in a preset coordinate system, or may be a position and an angle of a preset part (for example, a face, a body, or an eye) of the first user relative to the distance sensor. Based on this, the pose adjustment apparatus may obtain the position information of the first user within the preset range of the first display from the distance sensor. The distance sensor may include one or more of a Hall sensor, a TOF sensor, and a radar (for example, a millimeter-wave radar, a lidar, or an ultrasonic radar). This is not specifically limited in this embodiment of this application.

In a possible implementation, the pose adjustment apparatus may detect and identify, by using an angle sensor, a surrounding target object of the pose adjustment apparatus and a position and an angle of a preset part of the surrounding target object (for example, the first user) relative to the angle sensor, and the position and the angle of the preset part (for example, a face, a body, or an eye) of the first user relative to the angle sensor are sent to the pose adjustment apparatus through a communication connection to the pose adjustment apparatus.

The preset range in this embodiment of this application may be preset in the camera module or the distance sensor. For example, setting of the preset range may be related to factors such as an empirical value and an actual layout in a cockpit. This is not limited in this embodiment of this application.

It should be noted that, in the foregoing example, only an example in which the camera module or the distance sensor determines whether there is the first user within the preset range is used. This part of work may alternatively be performed by another related unit or module. This is not limited in this embodiment of this application. For example, the camera module or the distance sensor may alternatively send raw data collected by the camera module or the distance sensor to the pose adjustment apparatus, and the pose adjustment apparatus performs subsequent further analysis.

S402: The pose adjustment apparatus determines a position and a posture of the first display relative to the first user based on the position information of the first user.

For example, the position information of the first user obtained by the pose adjustment apparatus from the camera module is specific coordinate information of the first user in a preset coordinate system. The pose adjustment apparatus may determine the position and the posture of the first display relative to the first user based on the specific coordinate information of the first user in the preset coordinate system and specific coordinate information of the first display in the preset coordinate system.

Alternatively, for example, the position information of the first user obtained by the pose adjustment apparatus from the camera module is a position of the first user relative to the camera module. The pose adjustment apparatus may determine, through coordinate transformation, the position and the posture of the first display relative to the first user based on a position of the camera module on the first display and the position of the first user relative to the camera module.

Alternatively, for example, the position information of the first user obtained by the pose adjustment apparatus from the camera module is a position of the first user relative to the distance sensor. The pose adjustment apparatus may determine, through coordinate transformation, the position and the posture of the first display relative to the first user based on a position of the camera module on the first display and the position of the first user relative to the distance sensor.

In this embodiment of this application, the position of the first display relative to the first user may be a position of a geometric center of the first display relative to an eye of the first user, or may be a position of another position (for example, a middle position of the display) of the first display relative to another part (for example, a face, a body, or an eye) of the first user, depending on a specific situation. In this embodiment of this application, the posture of the first display relative to the first user may be an angle of a plane of the first display relative to a face direction of the first user, or may be an angle of a plane of the first display relative to a gaze direction of the first user, depending on a specific situation.

S403: The pose adjustment apparatus adjusts the position of the first display, so that a distance between the first display and the first user meets a preset distance range, and/or an angle of the first display relative to the first user meets a first preset angle range; and/or the pose adjustment apparatus adjusts the posture of the first display, so that the angle of the first display relative to the first user meets a second preset angle range.

Adjusting the position of the first display by the pose adjustment apparatus may include but is not limited to adjusting the first display upward, downward, forward, backward, leftward, rightward, or in another direction. Adjusting the posture of the first display by the pose adjustment apparatus may include but is not limited to adjusting a pitch angle, a roll angle, and the like of the first display. In this embodiment of this application, upward, downward, forward, backward, leftward, and rightward refer to directions relative to a position of a user, but a specific reference object is not limited, and may be determined based on a specific situation during actual application.

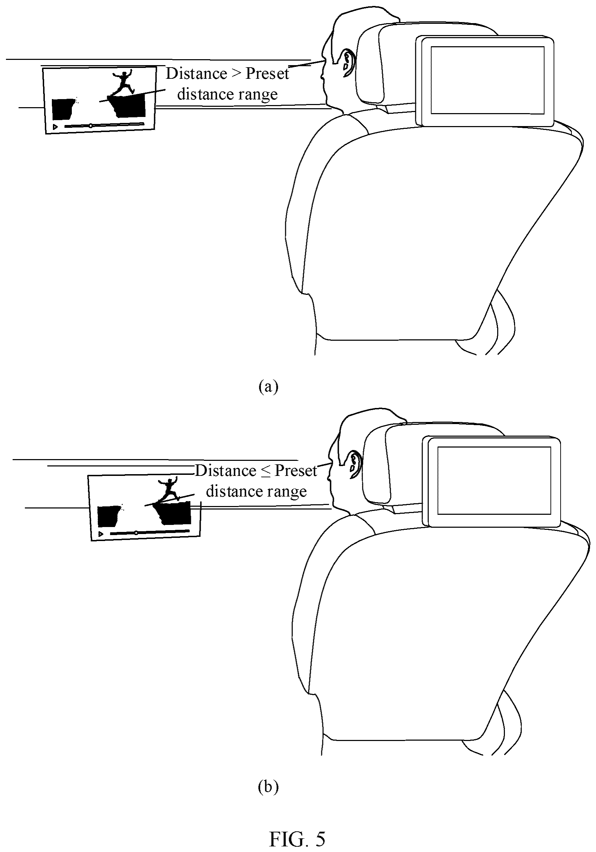

In an example, as shown in (a) of FIG. 5, a distance between a geometric center of the first display and an eye of the first user is greater than the preset distance range (for example, 50 cm). Therefore, whether the user can accurately view content on the first display may be affected. To enable the user to clearly view the content on the first display, as shown in (b) of FIG. 5, the pose adjustment apparatus adjusts the position of the first display forward, so that the distance between the geometric center of the first display and the eye of the first user is less than or equal to the preset distance range.

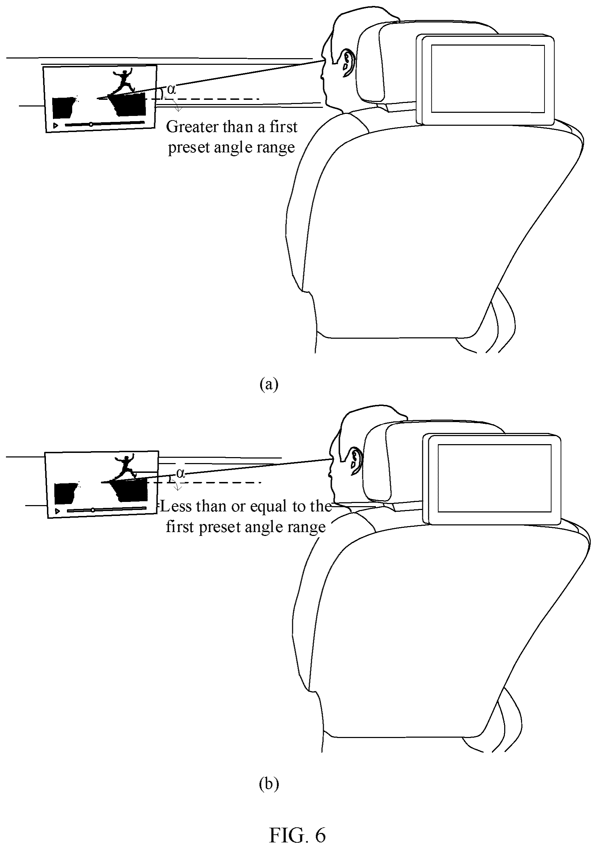

In an example, as shown in (a) of FIG. 6, an included angle α between a straight line that passes through the geometric center of the first display and that is perpendicular to a plane of the first display, and a connection line between the eye of the first user and the geometric center of the first display is not within the first preset angle range (for example, an angle range of ±15°). Therefore, comfort of the user in browsing the content on the first display may be affected. To enable the user to obtain more comfortable content browsing experience, as shown in (b) of FIG. 6, the pose adjustment apparatus adjusts the position of the first display upward, so that α meets the first preset angle range.

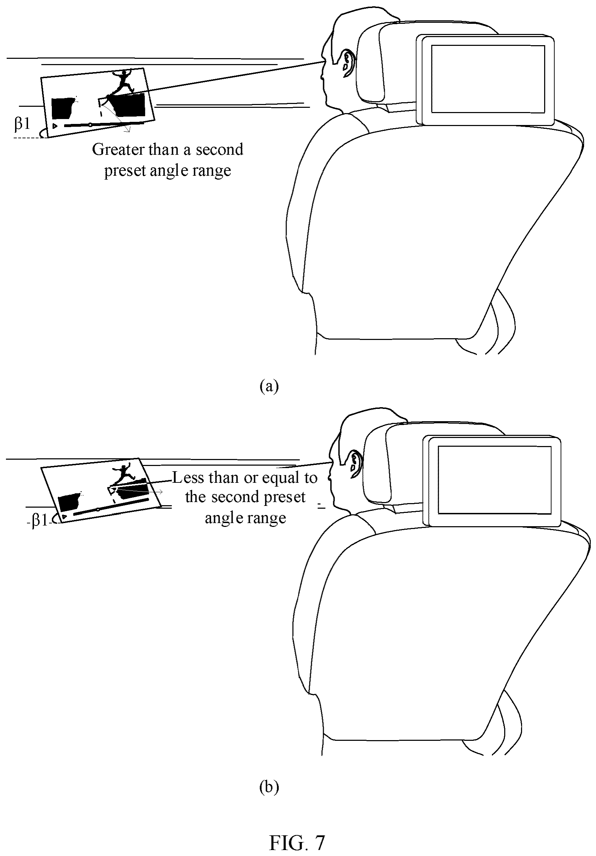

In an example, as shown in (a) of FIG. 7, an angle of the plane of the first display relative to a face orientation of the first user is not within the second preset angle range. Therefore, comfort of the user in browsing the content on the first display may be affected. To enable the user to obtain more comfortable content browsing experience, as shown in (b) of FIG. 7, the pose adjustment apparatus adjusts a pitch angle β1 of the first display (for example, an angle of the plane of the first display relative to a ground plane), so that the angle of the plane of the first display relative to the face orientation of the first user meets the second preset angle range.

In a possible implementation, the pose adjustment apparatus may calculate control parameters of the electric motor and the transmission rod based on the position and the posture of the first display relative to the first user, and the preset distance range and/or the preset angle range (for example, the first preset angle range and the second preset angle range), and execute a corresponding control instruction, to change the position and/or the posture of the first display.

It may be understood that, based on the implementation shown in FIG. 4B, the pose adjustment apparatus can automatically adjust the position and/or the posture of the display based on the real-time position information of the user. For example, when detecting that a user position/a user face orientation/a user gaze direction changes, the pose adjustment apparatus automatically controls the position and/or the posture of the display based on an actual change amount of the user position/the user face orientation/the user gaze direction to change correspondingly. For example, when the user is far away from the display, the display moves toward the user. In this way, the user not only can view the display, but also can view the display clearly and comfortably, thereby achieving better displaying effect and improving user experience.

A specific value of the preset distance range and/or the preset angle range (for example, the first preset angle range and the second preset angle range) is not limited in this application. Setting of a preset range value may be related to factors such as a specific usage scenario, an actual layout in a cockpit, and an empirical value. In a possible embodiment, the pose adjustment apparatus may adjust the position and/or the posture of the display based on position information of a seat within the preset range of the display.

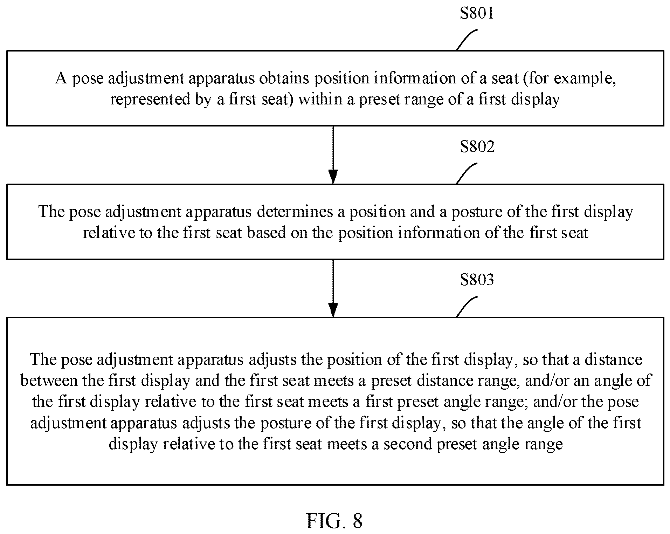

For example, FIG. 8 is a flowchart of another pose adjustment method for a display according to an embodiment of this application. As shown in FIG. 8, the pose adjustment method for the display provided in this embodiment of this application may include S801 to S803.

S801: A pose adjustment apparatus obtains position information of a seat (for example, represented by a first seat) within a preset range of a first display.

The first display may be any display in a vehicle. The first display may be configured to display a content interface, for example, an application interface or a mini program interface such as a navigation interface, a video interface, a music interface, a home interface, a shopping interface, or an office interface. This is not limited in this embodiment of this application.

A four-seat vehicle is used as an example in an in-vehicle scenario. The first display is a driver screen, a front passenger screen, a left rear screen, a right rear screen, or the like. Certainly, the first display may alternatively be any display in a cockpit of another multi-seat vehicle (for example, a two-seat vehicle, a seven-seat vehicle, or a six-seat vehicle). This is not specifically limited in this embodiment of this application.

In some embodiments, the position information of the first seat may represent a position of the first seat.

In some other embodiments, the position information of the first seat may further represent a backrest orientation of the first seat.

In a possible implementation, the pose adjustment apparatus may obtain, by using a camera module (for example, an infrared camera), an image within a framing range of the camera module, and perform feature analysis on the image. When the image includes a vehicle seat feature, the image is analyzed to determine position information of the seat (for example, the first seat). When the first seat is within the preset range of the first display, the position information of the first seat is sent to the pose adjustment apparatus through a communication connection to the pose adjustment apparatus. The position information of the first seat may indicate specific coordinate information of the first seat in a preset coordinate system, or may be a position and an angle of a preset part (for example, a headrest) of the first seat relative to the camera module. Based on this, the pose adjustment apparatus may obtain the position information of the first seat within the preset range of the first display from the camera module.

In a possible implementation, the pose adjustment apparatus may detect and identify, by using a distance sensor, a surrounding target object of the pose adjustment apparatus and a position of the surrounding target object relative to the distance sensor. When detecting and identifying that the surrounding target object within the preset range is a vehicle seat (for example, the first seat), the distance sensor may send the position information of the first seat to the pose adjustment apparatus through a communication connection to the pose adjustment apparatus. The position information of the first seat may indicate specific coordinate information of the first seat in a preset coordinate system, or may be a position and an angle of a preset part (for example, a headrest or a backrest) of the first seat relative to the distance sensor. Based on this, the pose adjustment apparatus may obtain the position information of the first seat within the preset range of the first display from the distance sensor.

In a possible implementation, the pose adjustment apparatus may detect and identify, by using an angle sensor, a surrounding target object of the pose adjustment apparatus and a position and an angle of a preset part of the surrounding target object (for example, the first seat) relative to the angle sensor, and the position and the angle of the preset part (for example, a headrest or a backrest) of the first seat relative to the angle sensor are sent to the pose adjustment apparatus through a communication connection to the pose adjustment apparatus.

The preset range in this embodiment of this application may be preset in the camera module or the distance sensor. For example, setting of the preset range may be related to factors such as an empirical value and an actual layout in a cockpit. This is not limited in this embodiment of this application.

It should be noted that, in the foregoing example, only an example in which the camera module or the distance sensor determines whether there is the vehicle seat within the preset range is used. This part of work may alternatively be performed by another related unit or module. This is not limited in this embodiment of this application. For example, the camera module or the distance sensor may alternatively send raw data collected by the camera module or the distance sensor to the pose adjustment apparatus, and the pose adjustment apparatus performs subsequent further analysis.

S802: The pose adjustment apparatus determines a position and a posture of the first display relative to the first seat based on the position information of the first seat.

For example, the position information of the first seat obtained by the pose adjustment apparatus from the camera module is specific coordinate information of the first seat in a preset coordinate system. The pose adjustment apparatus may determine the position and the posture of the first display relative to the first seat based on the specific coordinate information of the first seat in the preset coordinate system and specific coordinate information of the first display in the preset coordinate system.

Alternatively, for example, the position information of the first seat obtained by the pose adjustment apparatus from the camera module is a position of the first seat relative to the camera module. The pose adjustment apparatus may determine, through coordinate transformation, the position and the posture of the first display relative to the first seat based on a position of the camera module on the first display and the position of the first seat relative to the camera module.

Alternatively, for example, the position information of the first seat obtained by the pose adjustment apparatus from the camera module is a position of the first seat relative to the distance sensor. The pose adjustment apparatus may determine, through coordinate transformation, the position and the posture of the first display relative to the first seat based on a position of the camera module on the first display and the position of the first seat relative to the distance sensor.

In this embodiment of this application, the position of the first display relative to the first seat may be a position of a geometric center of the first display relative to a preset position (for example, a headrest) of the first seat, or may be a position of another position (for example, a middle position of the display) of the first display relative to another position of the first seat, depending on a specific situation. In this embodiment of this application, the posture of the first display relative to the first seat may be an angle of a plane of the first display relative to a vertical direction of a backrest of the first seat, or may be an angle of a plane of the first display relative to another related direction of the first seat, depending on a specific situation.

S803: The pose adjustment apparatus adjusts the position of the first display, so that a distance between the first display and the first seat meets a preset distance range, and/or an angle of the first display relative to the first seat meets a third preset angle range; and/or the pose adjustment apparatus adjusts the posture of the first display, so that the angle of the first display relative to the first seat meets a fourth preset angle range.

Adjusting the position of the first display by the pose adjustment apparatus may include but is not limited to adjusting the first display upward, downward, forward, backward, leftward, rightward, or in another direction. Adjusting the posture of the first display by the pose adjustment apparatus may include but is not limited to adjusting a pitch angle, a roll angle, and the like of the first display. In this embodiment of this application, upward, downward, forward, backward, leftward, and rightward refer to directions relative a position of a first seat, but a specific reference object is not limited, and may be determined based on a specific situation in actual application.

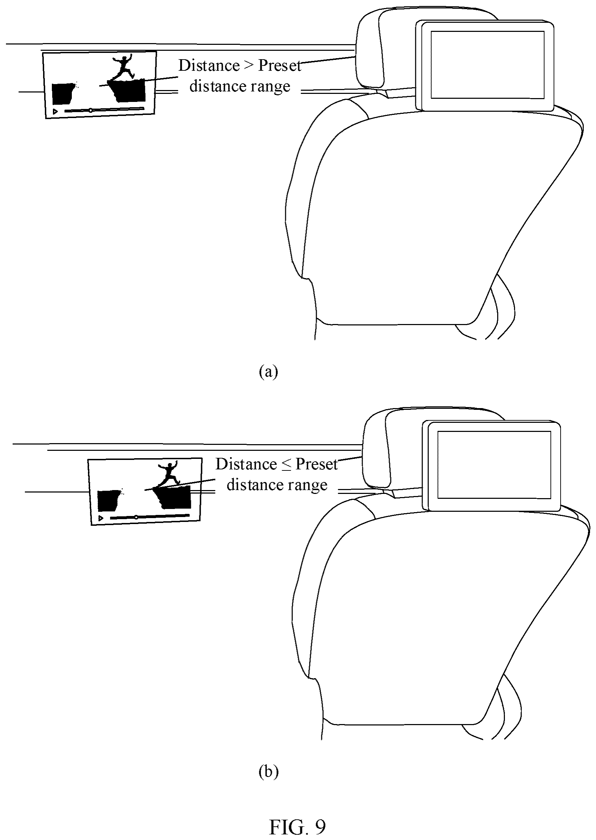

In an example, as shown in (a) of FIG. 9, a distance between a geometric center of the first display and a headrest of the first seat is greater than the preset distance range (for example, 50 cm). Therefore, whether the user on the first seat can accurately view content on the first display may be affected. To enable the user to clearly view the content on the first display, as shown in (b) of FIG. 9, the pose adjustment apparatus adjusts the position of the first display forward, so that the distance between the geometric center of the first display and the headrest of the first seat is less than or equal to the preset distance range.

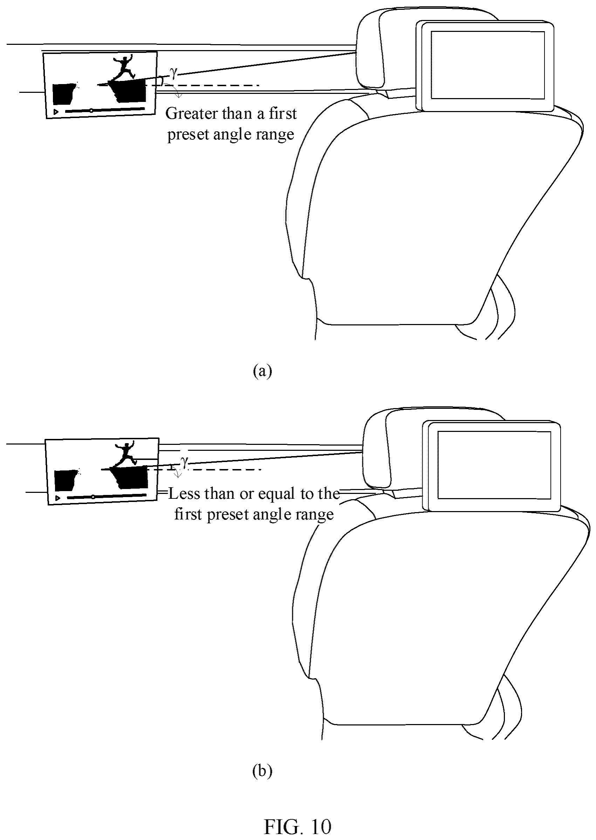

In an example, as shown in (a) of FIG. 10, an included angle γ between a straight line that passes through the geometric center of the first display and that is perpendicular to a plane of the first display, and a connection line between a geometric center of the headrest and the geometric center of the first display is not within the third preset angle range (for example, an angle range of ±15°). Therefore, comfort of the user on the first seat in browsing the content on the first display may be affected. To enable the user to obtain more comfortable content browsing experience, as shown in (b) of FIG. 10, the pose adjustment apparatus adjusts the position of the first display upward, so that γ meets the third preset angle range.

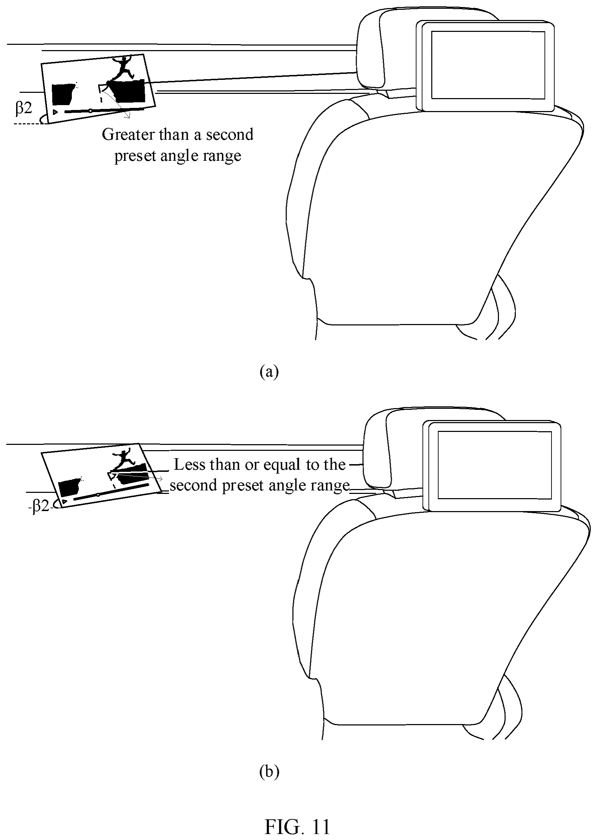

In an example, as shown in (a) of FIG. 11, an angle of the plane of the first display relative to a vertical direction of a backrest of the first seat is not within the fourth preset angle range. Therefore, comfort of the user in browsing content on the first display may be affected. To enable the user to obtain more comfortable content browsing experience, as shown in (b) of FIG. 11, the pose adjustment apparatus adjusts a pitch angle β2 of the first display (for example, an angle of the plane of the first display relative to a ground plane), so that the angle of the plane of the first display relative to the vertical direction of the backrest of the first seat meets the fourth preset angle range.

In a possible implementation, the pose adjustment apparatus may calculate control parameters of the electric motor and the transmission rod based on the position and the posture of the first display relative to the first seat, and the preset distance range and/or the preset angle range (for example, the third preset angle range and the fourth preset angle range), and execute a corresponding control instruction, to change the position and/or the posture of the first display.

It may be understood that, based on the implementation shown in FIG. 8, the pose adjustment apparatus can automatically adjust the position and/or the posture of the display based on the real-time position information of the seat. For example, when detecting that a seat position/a seat angle changes, the pose adjustment apparatus automatically controls the position and/or the posture of the display based on an actual change amount of the seat position/the seat angle to change correspondingly. For example, when the seat is reclined, a gaze direction of the user on the seat usually moves upward, and an angle of the gaze direction relative to a ground plane increases. In this case, a position of the display is adjusted (for example, moves upward) and/or a pitch angle of the display is adjusted (for example, an angle of the plane of the display relative to the ground plane is reduced), so that the user not only can view the display, but also can view the display clearly and comfortably, thereby achieving better displaying effect and improving user experience.

A specific value of the preset distance range and/or the preset angle range (for example, the third preset angle range and the fourth preset angle range) is not limited in this application. Setting of a preset range value may be related to factors such as a specific usage scenario, an actual layout in a cockpit, and an empirical value.

In a possible embodiment, the pose adjustment apparatus may adjust the position and/or the posture of the display based on historical pose information of the display.

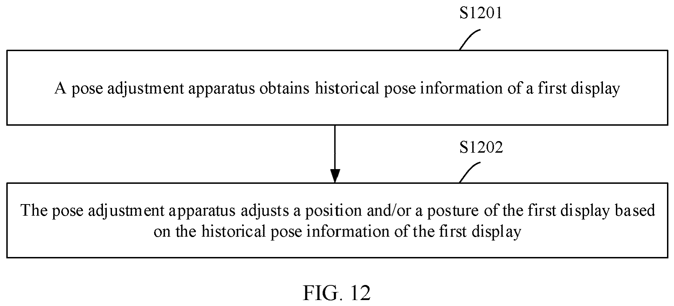

For example, FIG. 12 is a flowchart of another pose adjustment method for a display according to an embodiment of this application. As shown in FIG. 12, the pose adjustment method for the display provided in this embodiment of this application may include S1201 and S1202.

S1201: A pose adjustment apparatus obtains historical pose information of a first display.

The pose adjustment apparatus has an automatic memory function for a display pose.

The first display may be any display in a vehicle. The first display may be configured to display a content interface, for example, an application interface or a mini program interface such as a navigation interface, a video interface, a music interface, a home interface, a shopping interface, or an office interface. This is not limited in this embodiment of this application.

A four-seat vehicle is used as an example in an in-vehicle scenario. The first display is a driver screen, a front passenger screen, a left rear screen, a right rear screen, or the like. Certainly, the first display may alternatively be any display in a cockpit of another multi-seat vehicle (for example, a two-seat vehicle, a seven-seat vehicle, or a six-seat vehicle). This is not specifically limited in this embodiment of this application.

The historical pose information of the first display is position and posture information of the first display that is recorded in a historical use process of the first display. For example, the historical pose information of the first display may be position and posture information of the first display that is recorded after being manually triggered and adjusted by the user in a historical use process of the first display. For another example, the historical pose information of the first display may be position and posture information of the first display that is recorded after being automatically adjusted by the pose adjustment apparatus based on obtained information such as position information of the user and position information of the seat in a historical use process of the first display.

In an example, the historical pose information of the first display may be historical pose information of the first display within a preset time range (for example, within one month, one week, or one day).

In an example, the historical pose information of the first display may be historical pose information of the first display before a last shutdown.

Alternatively, the historical pose information of the first display may be pose information of the first display in another historical use process. This is not specifically limited in this embodiment of this application.

In an example, the historical pose information of the first display may be historical pose information in a previous process in which the first display logs in to a current login account of the first display. For example, assuming that a first account is currently logged in to on the first display, the obtained historical pose information of the first display may be historical pose information in a previous process in which the first account is logged in to on the first display. It may be understood that, when the first account is currently logged in to on the first display, the pose adjustment apparatus may consider that a user currently using the first display is highly likely to be the same as a user that logs in to the first account on the first display in a historical use process. Therefore, the historical pose information in a process of logging in to the first account on the first display may be used as reference data that can represent a user habit.

S1202: The pose adjustment apparatus adjusts a position and/or a posture of the first display based on the historical pose information of the first display.

For example, the historical pose information of the first display is the historical pose information of the first display before a last shutdown. In a possible example, the pose adjustment apparatus may adjust a pose of the first display to a pose of the first display before a last shutdown.

For example, the historical pose information of the first display is historical pose information of the first display within a preset time range (for example, within one month, one week, or one day). In a possible example, the pose adjustment apparatus may adjust a pose of the first display to a pose of the first display before a last shutdown, or the pose adjustment apparatus may adjust a pose of the first display to a most frequent pose of the first display within a preset time range.

It may be understood that the historical pose information of the display usually can reflect a use habit of the user. Therefore, based on the implementation shown in FIG. 12, the pose adjustment apparatus can automatically adjust the position and/or the posture of the display based on a historical use habit of the user. This not only can ensure that the user can view the display and view the display clearly and comfortably, but also can meet a use habit of the user, thereby improving user experience.

It should be noted that, in this application, the foregoing plurality of implementations may be randomly combined, to comprehensively perform automatic adjustment of the position and/or the posture of the display.

For example, in a possible implementation, the pose adjustment apparatus, the pose adjustment system, or the terminal including the pose adjustment apparatus or the pose adjustment system may comprehensively perform automatic adjustment of the position and/or the posture of the display based on a plurality of position information of a user within a preset range of the display, position information of a seat corresponding to the display, and the historical pose information of the display.

For another example, in a possible implementation, the pose adjustment apparatus, the pose adjustment system, or the terminal including the pose adjustment apparatus or the pose adjustment system can automatically adjust the position and/or the posture of the display based on the implementation shown in FIG. 12 when the historical pose information of the first display can be successfully obtained. Alternatively, the pose adjustment apparatus, the pose adjustment system, or the terminal including the pose adjustment apparatus or the pose adjustment system can automatically adjust the position and/or the posture of the display in a manner shown in FIG. 4B or FIG. 8 when the historical pose information of the first display fails to be successfully obtained.

It should be further noted that the pose adjustment apparatus, the pose adjustment system, or the terminal including the pose adjustment apparatus or the pose adjustment system in embodiments of this application not only has a capability of automatically adjusting the position and/or the posture of the display based on one or more pieces of information such as the position information of the user within the preset range of the display, the position information of the seat corresponding to the display, and the historical pose information of the display, but also supports the user in adjusting the position and/or the posture of the display in a conventional manual adjustment manner. For example, the pose adjustment apparatus, the pose adjustment system, or the terminal including the pose adjustment apparatus or the pose adjustment system may further calculate control parameters of the electric motor and the transmission rod based on an operation of pressing a control button, an operation of shaking a mechanical joystick, or the like, or according to an identified voice instruction or gesture instruction of the user; and execute a corresponding control instruction, to implement manual and precise adjustment of the position and/or the posture of the display.

In addition, in this application, the pose adjustment apparatus, the pose adjustment system, or the terminal including the pose adjustment apparatus or the pose adjustment system may not only automatically adjust the position and/or the posture of the display, but also automatically adjust a seat position and/or a backrest angle, to implement better displaying effect. In this way, the user not only can view the display, but also can view the display clearly and comfortably, thereby improving user experience. For example, the pose adjustment apparatus, the pose adjustment system, or the terminal including the pose adjustment apparatus or the pose adjustment system may adjust the position of the seat based on an adjusted position of the display; and/or adjust the backrest angle of the seat based on an adjusted posture of the display.

It should be understood that the solutions in embodiments of this application may be appropriately combined for use, and explanations or descriptions of terms in embodiments may be mutually referenced or explained in embodiments. This is not limited.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

It may be understood that, to implement functions in any one of the foregoing embodiments, the pose adjustment apparatus, the pose adjustment system, or the terminal including the pose adjustment apparatus or the pose adjustment system includes a corresponding hardware structure and/or software module for performing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional modules may be performed on the pose adjustment apparatus or the terminal including the pose adjustment apparatus or the pose adjustment system. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

It should be further understood that the modules in the pose adjustment apparatus or the terminal including the pose adjustment apparatus or the pose adjustment system may be implemented in a form of software and/or hardware. This is not specifically limited herein. In other words, the electronic device is presented in a form of a functional module. The "module" herein may be an application-specific integrated circuit ASIC, a circuit, a processor that executes one or more software or firmware programs and a memory, an integrated logic circuit, and/or another component that can provide the foregoing functions.

In an optional manner, when software is used for implementing data transmission, the data transmission may be completely or partially implemented in a form of a computer program product. The computer program product includes one or more computer instructions. When the computer program instructions are loaded and executed on a computer, the procedures or functions according to embodiments of this application are completely or partially implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or a wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disk (digital video disk, DVD)), a semiconductor medium (for example, a solid-state drive solid state disk (SSD)), or the like.

Method or algorithm steps described with reference to embodiments of this application may be implemented by hardware, or may be implemented by a processor by executing software instructions. The software instructions may include a corresponding software module. The software module may be stored in a RAM memory, a flash memory, a ROM memory, an EPROM memory, an EEPROM memory, a register, a hard disk, a removable hard disk, a CD-ROM, or a storage medium in any other form well-known in the art. For example, the storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in the pose adjustment apparatus, the pose adjustment system, or the terminal including the pose adjustment apparatus or the pose adjustment system. Certainly, the processor and the storage medium may exist as discrete components.

The description of the foregoing implementations allows a person skilled in the art to clearly understand that, for the purpose of convenient and brief description, division of the foregoing functional modules is taken as merely an example for illustration. In actual application, the foregoing functions can be allocated to and implemented by different functional modules as required. In other words, an inner structure of an apparatus is divided into different functional modules to implement all or some of the functions described above.

## Claims

1. A pose adjustment method for a display, wherein the method comprises:
obtaining first information, wherein the first information comprises one or more of the following information: position information of a first user within a preset range of a first display, position information of a first seat corresponding to the first display, and historical pose information of the first display; and
adjusting a position and/or a posture of the first display based on the first information.

2. The method according to claim 1, wherein the first information comprises the position information of the first user; and the adjusting the position and/or the posture of the first display based on the first information comprises:
adjusting the position of the first display, so that a distance between the first display and the first user meets a preset distance range, and/or an angle of the first display relative to the first user meets a first preset angle range.

3. The method according to claim 1 or 2, wherein the first information comprises the position information of the first user; and the adjusting the position and/or the posture of the first display based on the first information comprises:
adjusting the posture of the first display, so that the angle of the first display relative to the first user meets a second preset angle range.

4. The method according to any one of claims 1 to 3, wherein the first information comprises the position information of the first seat; and the adjusting the position and/or the posture of the first display based on the first information comprises:
adjusting the position of the first display, so that a distance between the first display and the first seat meets a preset distance range, and/or an angle of the first display relative to the first seat meets a third preset angle range.

5. The method according to any one of claims 1 to 4, wherein the first information comprises the position information of the first seat; and the adjusting the position and/or the posture of the first display based on the first information comprises:
adjusting the posture of the first display, so that the angle of the first display relative to the first seat meets a fourth preset angle range.

6. The method according to any one of claims 1 to 5, wherein the first information comprises the historical pose information of the first display; and the adjusting the position and/or the posture of the first display based on the first information comprises:
adjusting a pose of the first display to a pose of the first display before a last shutdown; or
adjusting a pose of the first display to a most frequent pose of the first display within a preset time range.

7. The method according to any one of claims 1 to 6, wherein the method further comprises:
obtaining control information for adjusting the pose of the first display by a user, wherein the control information is triggered by the user in any one of the following manners: a control button, a mechanical joystick, a voice instruction, and a gesture instruction; and
controlling, based on the control information, the position and/or the posture of the first display to change correspondingly.

8. The method according to any one of claims 1 to 7, wherein the method further comprises:
adjusting a position of the first seat based on an adjusted position of the first display; and/or
adjusting a backrest angle of the first seat based on an adjusted posture of the first display.

9. The method according to any one of claims 1 to 8, wherein the first information is obtained by using one or more of the following: a camera, a distance sensor, a pressure sensor, and an angle sensor.

10. The method according to any one of claims 1 to 9, wherein the first display is an in-vehicle display.

11. The method according to any one of claims 1 to 10, wherein the first display is any one of the following: a driver screen, a front passenger screen, a left rear screen, and a right rear screen.

12. A pose adjustment apparatus for a display, wherein the apparatus comprises:
an information obtaining module, configured to obtain first information, wherein the first information comprises one or more of the following information: position information of a first user within a preset range of a first display, position information of a first seat corresponding to the first display, and historical pose information of the first display; and
a control module, configured to adjust a position and/or a posture of the first display based on the first information.

13. The apparatus according to claim 12, wherein the first information comprises the position information of the first user, and that the control module is configured to adjust the position and/or the posture of the first display based on the first information comprises:
the control module is configured to adjust the position of the first display, so that a distance between the first display and the first user meets a preset distance range, and/or an angle of the first display relative to the first user meets a first preset angle range.

14. The apparatus according to claim 12 or 13, wherein the first information comprises the position information of the first user, and that the control module is configured to adjust the position and/or the posture of the first display based on the first information comprises:
the control module is configured to adjust the posture of the first display, so that the angle of the first display relative to the first user meets a second preset angle range.

15. The apparatus according to any one of claims 12 to 14, wherein the first information comprises the position information of the first seat, and that the control module is configured to adjust the position and/or the posture of the first display based on the first information comprises:
the control module is configured to adjust the position of the first display, so that a distance between the first display and the first seat meets a preset distance range, and/or an angle of the first display relative to the first seat meets a third preset angle range.

16. The apparatus according to any one of claims 12 to 15, wherein the first information comprises the position information of the first seat, and that the control module is configured to adjust the position and/or the posture of the first display based on the first information comprises:
the control module is configured to adjust the posture of the first display, so that the angle of the first display relative to the first seat meets a fourth preset angle range.

17. The apparatus according to any one of claims 12 to 16, wherein the first information comprises the historical pose information of the first display, and that the control module is configured to adjust the position and/or the posture of the first display based on the first information comprises:
the control module is configured to adjust a pose of the first display to a pose of the first display before a last shutdown; or
the control module is configured to adjust a pose of the first display to a most frequent pose of the first display within the preset time range.

18. The apparatus according to any one of claims 12 to 17, wherein
the information obtaining module is further configured to obtain control information for adjusting the pose of the first display by a user, wherein the control information is triggered by the user in any one of the following manners: a control button, a mechanical joystick, a voice instruction, and a gesture instruction; and
the control module is further configured to control, based on the control information, the position and/or the posture of the first display to change correspondingly.

19. The apparatus according to claim 17 or 18, wherein the control module is further configured to:
adjust a position of the first seat based on an adjusted position of the first display; and/or
adjust a backrest angle of the first seat based on an adjusted posture of the first display.

20. The apparatus according to any one of claims 12 to 19, wherein the information obtaining module obtains the first information by using one or more of the following: a camera, a distance sensor, a pressure sensor, and an angle sensor.

21. A pose adjustment system for a display, wherein the system comprises:
one or more displays;
a pose adjustment apparatus for a display, wherein the pose adjustment apparatus comprises an information obtaining module and a control module; and
one or more of the following: a camera and/or a sensor, a pose recorder, a pose control button and/or a mechanical joystick corresponding to the one or more displays, and a microphone.

22. A computer-readable storage medium, wherein the computer-readable storage medium stores computer-executable instructions, and when the computer-executable instructions are executed by a processing circuit, the method according to any one of claims 1 to 11 is implemented.

23. A chip system, wherein the chip system comprises a processing circuit and a storage medium, the storage medium stores instructions, and when the instructions are executed by the processing circuit, the method according to any one of claims 1 to 11 is implemented.

24. A terminal, wherein the terminal comprises the pose adjustment apparatus according to any one of claims 12 to 20 or the pose adjustment system according to claim 21.

25. The terminal according to claim 24, wherein the terminal is a vehicle.
